Europäisches Patentamt

**European Patent Office**

**Office européen des brevets**

(11) Publication number: **0 062 253**
A1

(12) **EUROPEAN PATENT APPLICATION**

(21) Application number: **82102535.0**

(22) Date of filing: **26.03.82**

(51) Int. Cl.³: **B 27 B 9/02,** B 27 F 5/02,
B 23 Q 1/16

(30) Priority: **07.04.81 IT 4003681**
**02.09.81 IT 2906681 U**

(43) Date of publication of application: **13.10.82**
**Bulletin 82/41**

(84) Designated Contracting States: **AT BE CH DE FR GB IT**
**LI NL SE**

(71) Applicant: **TOMESANI Società a Responsabilità**
**Limitata, 289, Strada Albarato Località Mulini Nuovi,**
**I-41100 Modena (IT)**

(72) Inventor: **Vecchi, Luciano, 236, Via Gibellini,**
**I-41100 Modena (IT)**

(74) Representative: **Gardi, Giuliano, Gardipatent-Palazzo**
**Prora 605,Via Giardini, I-41100 Modena (IT)**

(54) **A hand-held circular saw/disc cutter for woodwork.**

(57) The circular saw/cutter disc has its implement (9) axis (F) offset to a degree (E) with respect to the main drive centre-axis (C), transmission deriving from a motor whose casing serves as working handgrip; transmission of drive from centre-axis (C) to offset-axis (F) being brought about by a gesrpair (52 and 53); the height of the disc or blade with respect to a slot located in the box-housing forward surface (10) constituting the sole-plate being adjustable by means of a coarse-pitch threaded collar (37, 38 and 39) raising and lowering implement and gears alike within said box-housing (11) accommodating same. The angle (A) through which handgrip (4) is turned remains minimal and the return spring (29) does not exert excessive force. An alternative means of adjusting the implement height consists of a spacer (71) attached by way of bolts (73) to the lower-half (23) of base box-housing (11).

A hand-held circular saw/disc cutter for woodwork.

The invention relates to a hand-held saw-cum-cutter of the type having a circular blade or disc -viz. a power tool for cutting notches, housings and even linear grooves into timber, also for sawing through timbers of a given thickness. The prior art in this field shows hand-held power tools for cutting housings and sockets etc., as well as simpler hand-held units with circular blade/disc for general sawing purposes, though none exist which are capable of carrying out slotting and grooving cuts in addition to straight sawing -all on timber or any such similar material. Amongst hand-held tools for cutting arc-slots, one has a first type described in Italian Patent number 870.969 (Swiss priority no. 13.655) under the name of Steiner, and a second type described in Italian Patent no. 27976 A/76 (W. Germany priority no. P25 47 459.3) in the name of Lutz. The Steiner Italian patent has an elongated motor serving as hand-grip and is armed with a disc set with axis at 90° to right-angled drive, the motor being caused to slide longitudinally within its casing along guides and against the action of a spring in such a way that the user pushes forward axially on the motor in order to produce passage of the cutter disc through and out of the forward face of an appropriate box-section held flush with the workpiece and in so doing create a slot in the timber itself having the shape of segment to a circle, this destined to accommodate one half of a tenon fillet butt-joining the workpiece with a further timber. In the Lutz Italian patent one has a motor and disc identical to the above-mentioned, and a similar type or arrangement wherein the disc lies within a box-section at the tool fore held flush with the work-piece, the motor in this instance hinged out upon a lateral pivot mounted to the box-section itself in such a way as to obtain the cut by pushing the motor through a lateral course against the action of a spring, the resulting angular displacement urging the disc through into the timber and producing the slot -likewise in the form of segment to a circle. The Lutz invention incorporates a bevel gearpair in its angle transmission.

The prior art thus outlined standes in need of further improvements -viz.with regard to the need for uniting the various functions of arced-slot cutting, kerfing of sockets and linear grooves in general, and plain sawing, within the scope of a single hand-held power tool, thus allowing the user -especially craftsmen and tradesmen- an option of purchasing a single hand-held power cutter/saw instead of two or three separate power tools, and furnishing him with a more compact and easily-manipulated unit.

From the foregoing argument one may discern the need for resolving a technical problem posed by the demand for a single hand-held woodworking power-tool capable of cutting linear grooves and sawing through, in addition to the usual slots and notches, all with the minimum of effort; a tool in which angular displacement of the gripped motor is kept to a minimum and in which the cutting tool may be simply extracted and replaced without the need for dismantling the box-section housing same, which could even be a one-piece unit; a tool designed -moreover- in such a way as to eliminate bevel-gearing commonly used for angle-transmission thereby doing away with an obstacle in the way of high speed/low torque ratios which are necessary, for instance, to the cutting of slots in the form of segment-to-a-circle.

The invention described herein resolves the above-stated technical problem by the use of a tool off-set with respect to the drive-motor shaft and capable of being withdrawn from the base box-section wherein it is turned by a geartrain accommodated within a bell-housing capable of rotating with respect to motor shaft aforesaid whilst attached to the motor-casing at one extremity thereof, said casing serving as the power-tool handgrip. The bell-housing forms a turning pair with the inner surface of a bushing whose outer surface is knurled and which is threaded in order to engage with and lock against the upper half, or cover, of the base box-section for the purpose of obtaining constant adjustment of the blade/disc height showing through the slit located in the box-section sole-plate. A further embodiment of the invention replaces this knurled and threaded bushing with a smooth and removable

0062253

collar made fast to the base box-section cover by means of
bolts. If need be, a spacer may be attached to the surface of
the box-section lower half by means of bolts -thus providing for graduated adjustment of the tool cutting-height.

Advantages offered by the invention are these: a capacity
for linear grooving and straight sawing in addition to slot
and notch-cutting; speedy action, with minimum angular displacement of the motor-grip both per se and with respect
to the transverse dimensions of the box-section, with minimum
effort, and with no need whatever fot the user's pressing
the sole-plate against the workpiece; easy extraction and
replacement of the cutting blade/disc regardless of diameter
and without dismantling the box-housing; blade-adjustment
and withdrawal brought about by the same means; adjustment
of the handgrip turning angle; facility of adjusting the
disc-height through a preset distance by means of a bolt-
fitted spacer, without the need for checking cuts thus produced.

The invention will now be described -by way of example- with
the aid of the eight accompanying sheets of drawings, in
which:

Fig 1 is a plan of the power cutting-tool in which the disc-
depth is regulated by a knurled and threaded bushing locked
with respect to the base box-section cover; the tool is shown
in position ready for cutting a straight groove in the timber;

Fig 2 is a view from the same aspect as Fig 1 with the tool
shown making a groove -this being illustrated in part-section;

Fig 3 is further part-section showing the tool and timber in

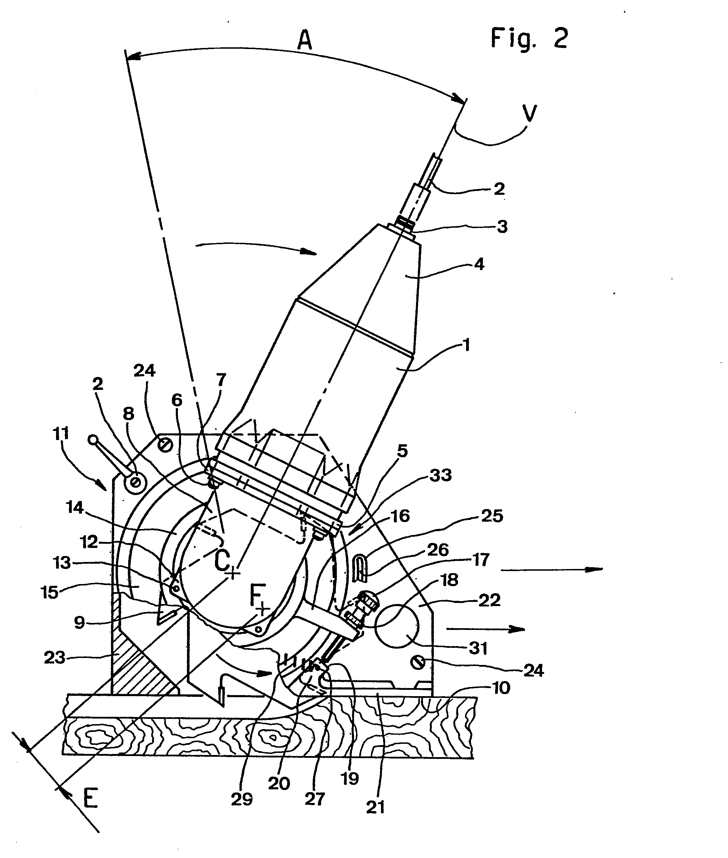

Fig 2 from the right so as to demonstrate their respective
position;

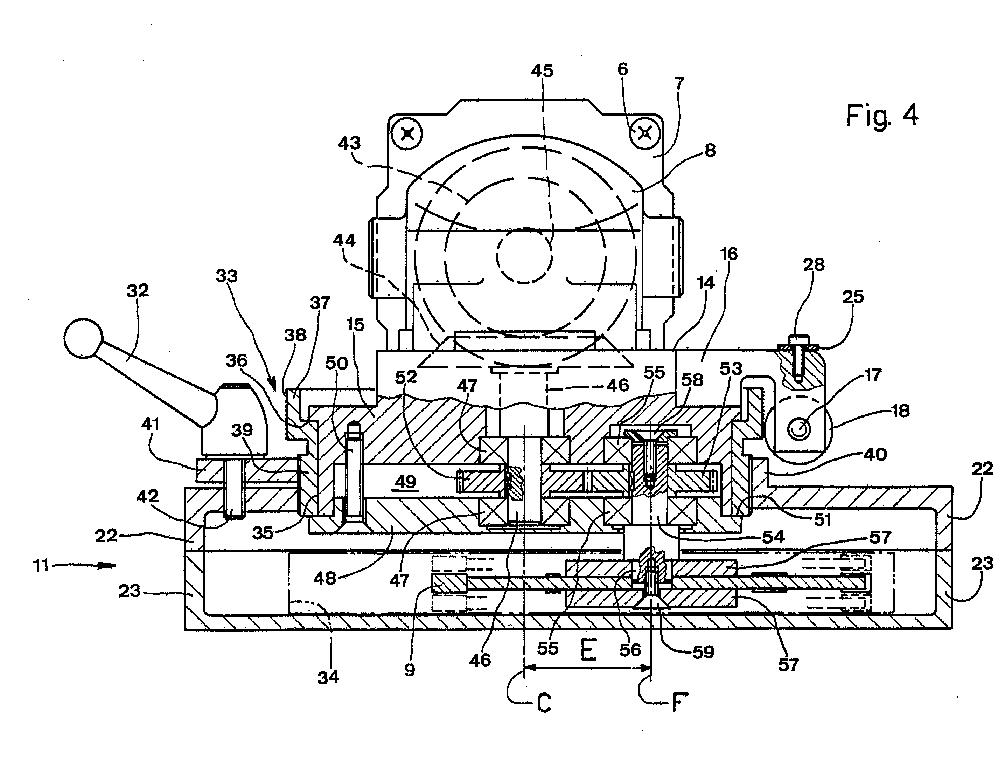

Fig 4 is a vertical section showing part of the tool's base
box-section, rendered in larger scale so as to exhibit the
cutter's offset drive mechanism;

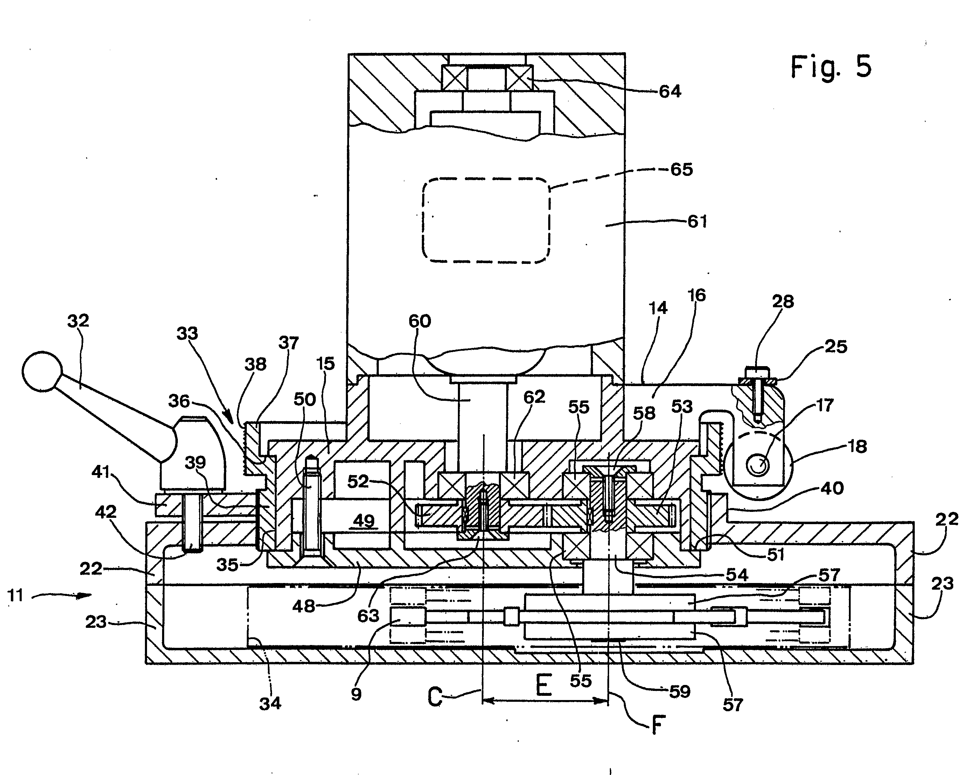

Fig 5 is a similar section to that in Fig 4 with the difference that the adoption of an axially aligned transmission
between motor and box-housing obviates the need for bevel
gearpairing; this in order to obtain the high-rpm/low torque ratio necessary for cutting arc-slots;

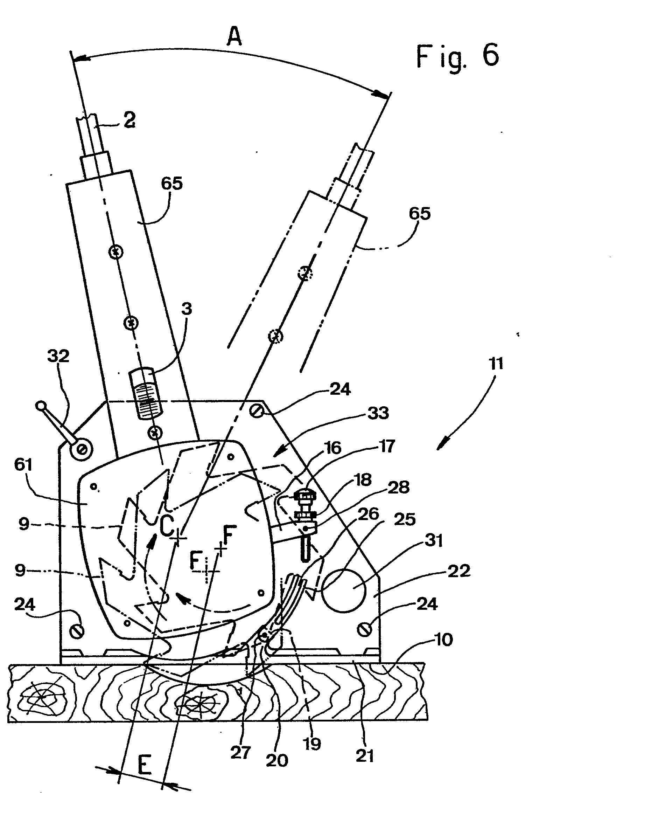

Fig 6 is a plan of the tool in Fig 5 showing the shape of the cut arc-slot;

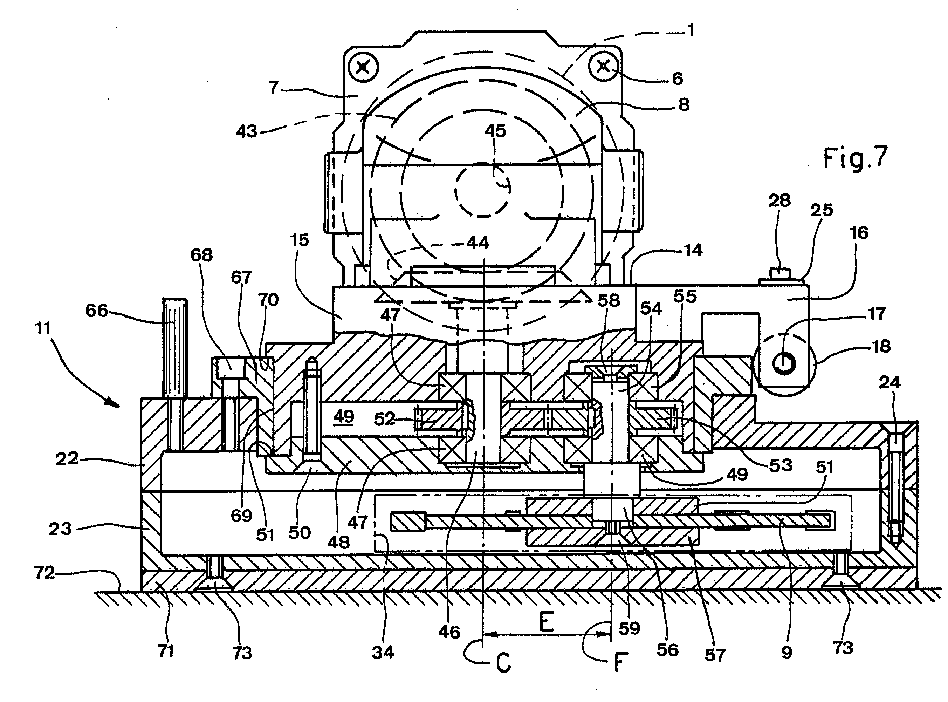

Fig 7 is a further vertical part-section as per Fig 4 showing a slightly different embodiment of the tool in which the blade/disc height is adjusted by means of a spacer fitted to the box-housing lower-half's outer face;

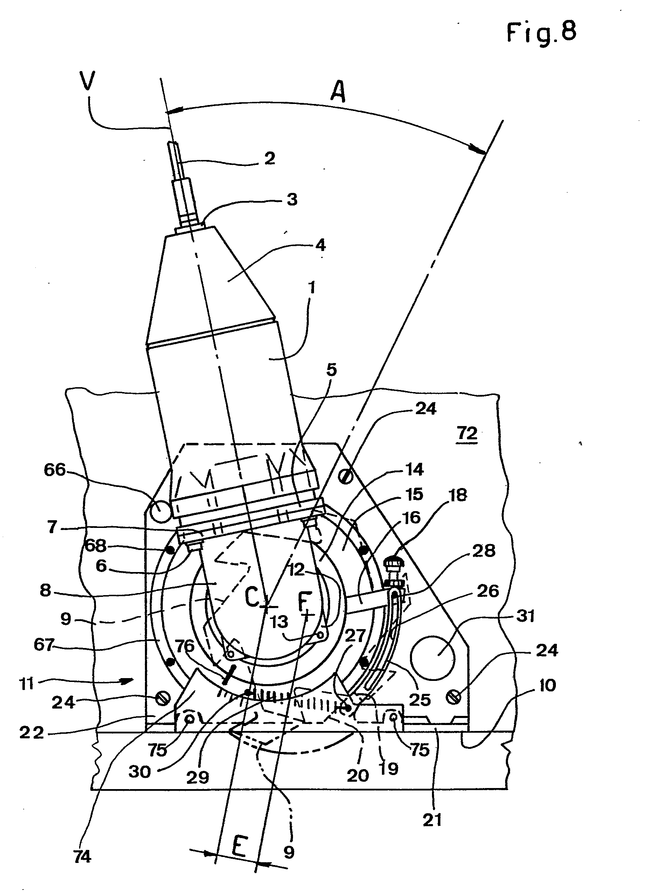

Fig 8 is a plan of the tool in Fig 7.

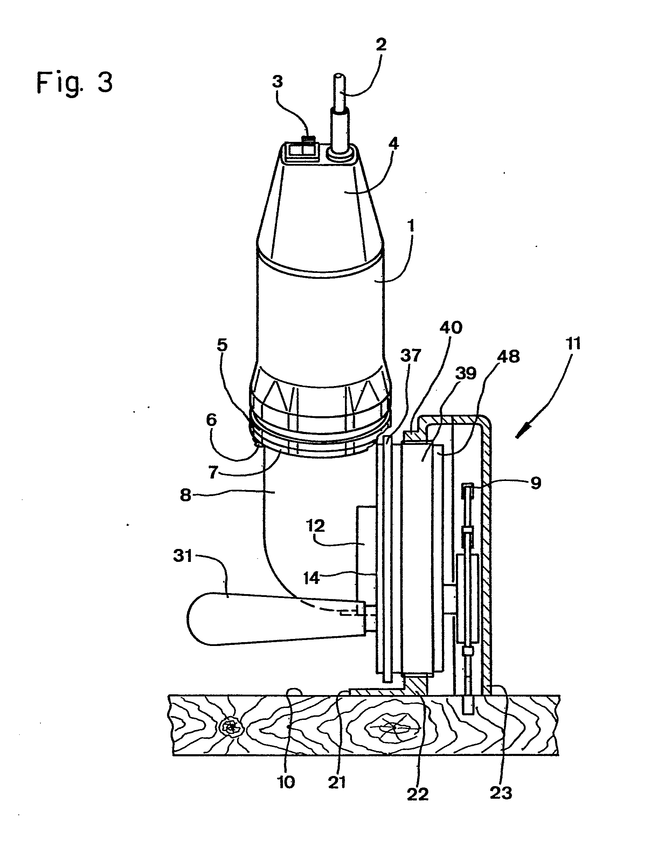

With reference to the drawings, 1 denotes a cylindrical casing accommodating an electric motor powered by a cable 2 and controlled by means of a switch 3 located on the truncated section of conical handgrip 4; casing 1 ends in a flange 5 affixed by way of bolts 6 to the flange 7 of an elbow or square-bend housing 8 encasing a bevel gearpair; C and F represent axes of the motor drive-transmission and of the circular disc/blade centre shaft, respectively; E denoting the degree of offset existing between C and F which allows blade/disc 9 due exit from the slit in sole-plate 10 of the base box-housing 11 -this composed of two half-sections- in order to accomplish arced or continuous slots, notches, kerfs etc. 12 denotes the tool-end flange of elbow 8 which connects with the bell-housing upper surface 14 by way of bolts 13, bell-housing 15 itself inserting into base box-section 11; 16 denotes an arm extending radially from the upper part of bell-housing 15 and carrying a tangentially-disposed bolt 17 and locking nut 18 for limiting the amount of turn on casing 1; by coming to rest on stop 19 located at the end of a protrusion 20 offered by the extension 21 of box-housing upper-half 22 (see Fig 3), the adjustable tip of bolt 17 furnishes the means by which the user may determine a correct degree of angular travel on handgrip 4 ensuring the desired penetration of blade/disc 9 into the work piece. The lower-half of box-housing 11 is denoted by 23 and matches with upper-half 22, affixed thereto by way of four bolts 24; an arcuate slide 25 showing a centre-slot 26 is affixed to protrusion 20 by way of bolt 27, with 28 denoting a further bolt pairing with a corresponding female thread located in radial arm 16 aforesaid, the shank of bolt 28 passing through slot 26 thus providing means by which to lock the angular position of motor casing 1; 29 denotes a spring anchored at the one end to bolt 27 and at the other to a pin 30 located on bell-housing 15. A further handgrip 31 is mounted to box upper-half 22, and a locking lever is denoted by 32. With reference to Fig 4, 33 represents a shaped, threaded collar designed for determining the height of blade/disc 9 with respect to its slit passage 34 in the sole-plate 10 of box-housing 11, and for centring and bearing coaxial bell-housing 15, said functions performed by means of its pairing through cylindrical surface 35 and about annular surface 36 respectively, said collar 33 serving furthermore to give access for removal of blade/disc 9 from box-housing 11 together with the complete mechanism, when totally unscrewed therefrom,-this being possible without having to remove bolts 24 holding the actual box-halves together; an upper portion 37 of greater diameter than the main collar body 33 bears a knurled outer face 38 affording opportune grip when manipulating; the lower extremity 39 of collar 33 is threaded at coarse pitch and pairs thus with the boss 40 offered by box upper-half 22 and provided with an eccentric portion 41 raised marginally above the upper surface of the box-half proper in order to create a clamp operated by lever 32 turning about bolt 42 which will lock threaded collar 33 with box-upper-half 22. 43 and 44 denote two bevel gears forming a pair, the former keyed to motor-shaft 45 issuing from casing 1 and the latter keyed to centre-shaft 46 so as to pair with the former at right-angles concurrently with said axis C, shaft 46 lying thus square and supported in rotation by bearings 47 on the one side to the bell proper 15 and on the other to the bell lower cover 48 which mates with the bell-housing chamber 49 orifice and is affixed to the body of bell-housing 15 by way of bolts 50; 51 denotes a lower perimeter lip extending out from cover 48 and mating tightly with the lower extremities both of bell-housing 15 and of threaded collar 33 thus providing a stop shoulder.

A gearwheel 52 keyed onto centre-shaft 46 and turning about axis C pairs with a further gearwheel 53 keyed in like manner onto further shaft 54 and turning about axis F, the latter offset radially from axis C by a distance denoted E; shaft 46 passes through a hole in the centre of bell-housing 15 whilst shaft 54 inserts into a cavity located eccentrically in the bell body and turns in bearings 55 located one uppermost in said bell-housing 15 and the other below in said cover 48; a diameter bulge in shaft 54 reduces once more into shaft-end 56 whereon the tool blade/disc 9 is keyed sandwiched between retaining washers 57; 58 and 59 denote bolts making fast bearings 55 and blade/disc 9 respectively.

With reference to Fig 5, 60 denotes the shaft of a motor housed within casing 61 and disposed coaxially therewith; 62 denotes a single bearing affording support to shaft 60 as it passes through a centre hole in bell-housing 15; a bolt 63 locks gear 52 onto the lower end of said shaft 60; further bearing 64 is located around shaft 60 at the uppermost extremity of motor casing 61; Fig 6 illustrates a handgrip 65 affixed to casing 61 and extending therefrom at right-angles in a transverse direction; 66 -in Fig 7- represents a limit stop for motor casing 1 in start position; a removable collar denoted by 67 is made fast to the upper face of upper box-half 22 and serves to maintain the disc or blade 9 at the correct level with respect to slit 34 in the base-box sole-plate 10 as well as for centring coaxial bell-housing 15 and bearing same in rotation, the two functions performed by dint of its pairing through cylindrical surface 69 and annular surface 70, respectively, said surfaces being disposed perpendicularly to one another; by removing bolts 68 the collar 67 may be lifted clear permitting extraction of blade/ disc 9 and its related mechanism from box-housing 11 without the need for removing bolts 24. A spacer block indicated by 71 can be attached by means of bolts 73 to the outer surface of base-box lower-half 23 in order to adjust the height of blade/disc 9 with respect to the workpiece guide or fence 72; in Fig 8, a graduated protractor plate is bolted at points 75 to aforesaid extension 21 on the base upper-half 22, an indicator 76 mounted to bell-housing 15 combining therewith in determining the degree to which handgrip axis V must be turned through angle A in order to achieve the desired depth of cut.

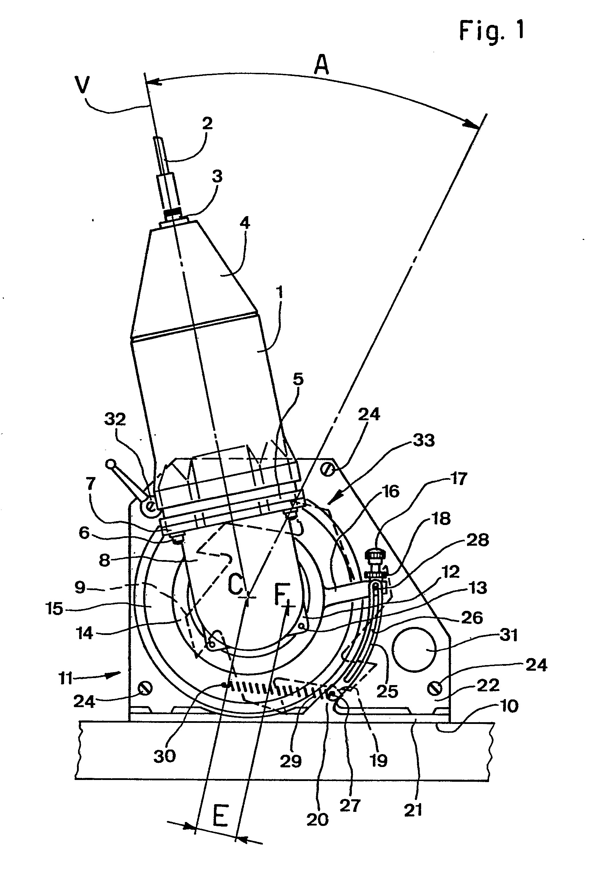

Function in the case of figs 1, 2, 3, 4, 7 and 8 is as follows: in the event of an arc-slot being cut, for instance, once the motor is running and the box-housing sole-plate 10 offered to the workpiece, all that is required is to turn handgrip 4 through angle A in a clockwise direction (with respect to the drawing) as far as will produce penetration of blade/disc 9 to the depth intended -see figs 1 and 2. The degree of travel through angle A is established by setting the distance between the tip of bolt 17 and the stop 19 offered by protrusion 20 issuing from the extension 21 presented by box upper-half 22, said travel through angle A and the effort required therefor being minimal; the user merely gripping on motor casing extension 4 with his right hand and laying hold on handgrip 31 with his left, then quickly working on first handgrip 4 so as to take same through angle A to the appropriate depth whereupon it will return to its initial position through the agency of spring 29. In the case of Fig 5 and 6 where motor casing 61 offers no grip, the user lays hold on handgrip 65 in order to turn the motor through angle A in like manner, the action being even faster due to a higher drill-speed obtained by elimination of bevel-gearing. When cutting a continuous groove as in Fig 2 the user must take the tool through angle A to the desired depth and then draw the complete along the line by means of handgrip 31 -the same applying when saying through loose or made-up timbers along a given line. With reference to Figs 1 to 6, in order to extract disc or blade 9 from its box-housing 11, the clamp formed by portion 42 and box-half 22 is loosened by turning lever 32 whereupon a few turns will release threaded collar 37, 38 and 39 thus tipping out the complete disc/blade-and-drive assembly enabling removal of the latter without any need for loosening bolts 24. Adjustment of the blade/disc 9 height with respect to box-housing 11 is brought about by part loosening or tightening collar 37, 38 and 39 and re-clamping on lever 32 -the operation being a matter of seconds. It will be observed that the particular shape given to box-housing 11 furnishes the tool with clear side square with the sole-plate, the opposite side accommodating handgrip 31, screwadjustment of angle A, and return spring 29, whilst the area nearest motor-casing 1 offers space for the lever with which to lock threaded collar 37, 38 & 39. For removal of blade or disc 9 from its box-housing as illustrated in Figs 7 and 8 it suffices to loose and withdraw bolts 68 attaching collar 67 to the upper face of box-housing upper-half 22. It will be observed further, that in addition to more simple and convenient embodiment of the pivoted-motor type of power cutting-tool in terms of use, the invention is also simple, compact and convenient in techincal design; what is more, embodiments wherein the motor itself is hung out on the main pivot must be adjusted for cutting depth by means of a complex device working on the pivot itself which does not permit removal of the disc or blade from its main housing save by dismantling the latter. Furthermore, the degree of offset E between main drive and cutter-axis is kept to a minimum in the invention, making for a reduced overall dimension. All such advantages favour a power-tool in terms of weight and cost, these being decidedly lower in the embodiments to which the invention relates when measured against those of the prior art.

When carrying the invention into effect, materials employed, dimensions, design particulars may all differ from the above description and attached illustrations without by any means losing technical equivalence neither straying from within the bounds of protection afforded to the invention as claimed below.

CLAIMS

1. Hand-held circular saw/disc cutter for woodwork comprising a grip and casing housing a motor transmitting drive by way of gears to a blade or disc of adjustable height mounted within a box-housing forming the tool base and with an opening to the fore thus creating a sole-plate offered to the workpiece, with respect to which said motor may be angularly displaced through being drawn by hand against the action of a spring anchored between stationary and moving parts of the tool, characterised by the fact that the axis (F) of the cutting implement (9) is offset with respect to the tool centre-axis (C) established either by motor axis proper or by 90° transmission of drive therefrom to the implement; said centre axis (C) -whether direct drive (60) or halfshaft (46) -being that of the shaft on which to key a gear (52) pairing with a further gear (53) keyed onto the shaft (54) having said offset axis (F); the lower extremity (56) of said offest shaft (54) being that to where implement (9) aforesaid is coaxially united whilst suspended within the box-housing (11) formed by an upper half (22) and a lower-half (23).

2. Circular saw/disc cutter according to claim 1 characterised by the fact that the extremity of the main drive casing whether square (1 and 8) or direct (61) is attached to the upper surface (14) of a bell-housing (15) offering a centre-hole for the passage of the centre-shaft (46) constituting axis (C) which is supported in rotation by said bell-housing and lower cover (48) thereof which latter creates a chamber (49) within said bell for accommodation of gears (52 and 53) aforesaid; the shaft (54 - 56) constituting offset axis (F) likewise supported in rotation by said bell-housing and cover, the latter affording passage through to the lower extremity of said shaft to which the implement (9) is duly keyed.

3. Circular saw/disc cutter according to claims 1 and 2 characterised by the fact that the lateral cylindrical surface (35) of said bell-housing (15) is provided uppermost with a peripheral lip and couples with the corresponding inner cylindrical surface of a collar (37) provided with an external thread at its lower region (39) by means of which to pair with a matching thread tapped into the aperture offered by box upperhalf (22) and its boss (40), there being a lateral portion (41) extending therefrom separated from the upper surface of said box-half; a perimeter lip (51) protruding from cover (48) enclosing bell-housing (15) bearing up lower extremities both of bell-housing and of said threaded collar (37), the latter being provided with a shoulder (36) enabling its locking against the bell-housing rim offered thereto; said collar (37) terminating at the extremity farthest from cover (48) in a knurled border of greater diameter; the lateral portion (41) of boss (40) and the surface underlying same being furnished with threaded centres for acceptance of a locking bolt (42) worked by lever (32).

4. Circular saw/disc cutter according to claims 2 and 3 characterised by the fact that the upper region of bell-housing (15) is provided with a lateral arm (16) whose lower extremity carries a tangentially-disposed adjustment screw (17); the tip of said screw or bolt making contact with a stop (19) located on a protrusion (20) issuing from an extension (21) of box upper-half (22) as a result of angular displacement of the motor during cutting; there being a further bolt (28) set upwardly of and perpendicular to that aforesaid, screwed to said arm (16) with shank passing through the centre-slot (26) of an arcuate slide-plate (25) affixed to said protrusion (20) and sliding with respect to same for the purpose of locking the motor into a given angular position.

5. Circular saw/disc cutter according to claims 1, 2,3 and 4 characterised by the fact that the base box-housing (11) presents an irregular profile when viewed in plan constituted thus -departing from the sole-plate (10) with exit-slit for implement (9) to which spring (29) is parallely-disposed, and advancing clockwise: a square side; a side bevelled off at the point where lever (32) is grasped for the purpose of locking collar (37) with bell-housing (15); an upper side disposed parallel with the sole-plate; a further raked side nearest screw-adjust arm (17), and a final short side perpen-

- 11 -  0062253

dicular to sole-plate (10) where handgrip (31) is located.

6. Circular saw/disc cutter according to claim 1 characterised by the fact that where no angle-drive exists between motor and main axis, casing (61) -is provided with a handgrip (65) affixed laterally to said casing and affording entry to electric cable (2) as well as carrying switch (3).

7. Circular saw/disc cutter according to claim 1 characterised by the fact that the said revolving bell-housing (15) forms turning pair with the inner surface offered by a collar (67) fitted into the upper face of box upper-half (22) and affixed thereto by way of bolts (68) in such a manner as to be easily removed; a spacer (71) -likewise removable- being bolted through points (73) to the outer face of box-housing lower-half (23).

Fig. 1

Fig. 2

Fig. 3

Fig. 4

Fig. 5

Fig. 6

Fig.7

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-1 651 995 (CASEY) <br> * page 1, lines 72-93 * | 1-5 | B 27 B 9/02 <br> B 27 F 5/02 <br> B 23 Q 1/16 |
| X | US-A-1 674 003 (CASEY) <br> * claim 1; page 2, lines 44-65 * | 1,2,4 | |
| A | GB-A- 192 642 (KRONQUIST) <br> * page 2, lines 13-18 * | 6 | |
| A | GB-A-1 427 700 (POLLARD) <br> * page 1, lines 66-78 * | ·7 | |
| A | CH-A- 289 447 (WITTWER) | | |
| A | CH-A- 277 402 (MULLER) | | TECHNICAL FIELDS SEARCHED (Int. Cl. 3) |
| A | CH-A- 276 786 (REICH) | | B 27 B <br> B 27 C <br> B 27 F |
| A | CH-A- 239 254 (SCHNYDER) | | B 27 G <br> B 23 C <br> B 23 D <br> B 23 Q |
| A | DE-C- 838 951 (FESTO) | | |
| A | DE-C- 743 056 (FESTO) | | |

The present search report has been drawn up for all claims

| Place of search | Date of completion of the search | Examiner |
|---|---|---|
| THE HAGUE | 25-06-1982 | DE GUSSEM J.L. |

# EUROPEAN SEARCH REPORT

**European Patent Office**

0062253

Application number

EP 82 10 2535

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-C- 643 649 (MAFELL) | | |
| A | GB-A- 732 455 (PASS) | | |
| A | US-A-1 671 201 (MICHOCK) | | |
| A | US-A-1 497 067 (CASEY) | | |

TECHNICAL FIELDS
SEARCHED (Int. Cl. ³)

The present search report has been drawn up for all claims

| Place of search | Date of completion of the search | Examiner |
|---|---|---|
| THE HAGUE | 25-06-1982 | DE GUSSEM J.L. |